Europäisches Patentamt

(19) European Patent Office

Office européen des brevets

(11) Publication number : **0 334 466 B1**

(12)

# EUROPEAN PATENT SPECIFICATION

(45) Date of publication of patent specification :
05.08.92 Bulletin 92/32

(51) Int. Cl.[5] : **A23L 1/05, A23L 1/06**

(21) Application number : **89300096.8**

(22) Date of filing : **06.01.89**

(54) A method of manufacturing jelly products having fibrous texture.

(30) Priority : **11.03.88 JP 56130/88**

(43) Date of publication of application :
**27.09.89 Bulletin 89/39**

(45) Publication of the grant of the patent :
**05.08.92 Bulletin 92/32**

(84) Designated Contracting States :
**DE FR GB**

(56) References cited :
**EP-A- 0 045 158
US-A- 4 046 925
PATENT ABSTRACTS OF JAPAN, vol. 7, no. 56
(C-155)(1201), 8th March 1983
PATENT ABSTRACTS OF JAPAN, vol. 5, no. 49
(c-49)(721). 8th April 1981
PATENT ABSTRACTS OF JAPAN, vol. 7, no.
39(C-151)(1184), 17th February 1983
PATENT ABSTRACTS OF JAPAN, vol. 9, no. 5
(C-260)(1728), 10th January 1985**

(73) Proprietor : **MORINAGA MILK INDUSTRY CO.,
LTD.
33-1, Shiba 5-chome
Minato-ku, Tokyo 108 (JP)**

(72) Inventor : **Okonogi, Shigeo
10-12 Chuoh 5-chome Ohta-ku
Tokyo (JP)**
Inventor : **Yuguchi, Hiroya
33-6 Sakuragaoka 3-chome Setagaya-ku
Tokyo (JP)**
Inventor : **Tanai, Sumio
Ashinabashi-Heights 56 17-10 Isogo 2-chome
Isogo-ku Yokohama-shi Kanagawa-ken (JP)**
Inventor : **Morimoto, Keiji
13-593 Gokomutsumi
Matsudo-shi Chiba-ken (JP)**

(74) Representative : **Baillie, Iain Cameron et al
c/o Ladas & Parry, Altheimer Eck 2
W-8000 München 2 (DE)**

EP 0 334 466 B1

## Description

The present invention relates to a method of manufacturing jelly products having fruit-like fibrous texture wherein a plurality of liquid materials are separately prepared, the resulted liquid materials are mixed at a temperature higher than the gelling temperature determined by the gelling agents used in said liquid materials, then the resulted mixture is cooled for gelling.

Heretofore many attempts have been made to give fresh fruit-like texture to jelly products. In accordance with one of the most typical methods, fruit pulps are actually mixed to a liquid material for preparing jelly products. In this method, however, it is necessary to use a substantial proportion of pulp in the ingredients for the products to get the desired texture and to minimize shearing force applied to the liquid material in the manufacturing process to reduce destruction of fibrous texture of the pulp. These requirements, however, contradict to each other, since increase of the pulp content results in increase of viscosity of the liquid material which in turn results in increase of shearing force to be applied to the pulps in the liquid material and leads to destruction of fibrous texture of the pulp during the process. Thus this method is not applicable to the cases wherein fruits having soft texture such as melons, peaches and bananas are used.

Methods have been disclosed wherein jelly products are made with an imitation fruit-like texture without using fruit pulp. One example of such a method involves freezing/ thawing (cf: Japanese Unexamined Patent Application Gazette Nos. 57(1982)-189653 and 57(1982-36950). More particularly, jelly is frozen to form ice crystals in a gel texture, and after making the ice crystals grow to a desired extent for partial destruction of the gel texture, the frozen jelly is thawed to form partially destroyed and partially undestroyed texture to thereby form an overall fibrous texture. This method, however, has the defects that a large scale installation for freezing and thawing is required when the method is worked on an industrial scale. Furthermore this method has the disadvantage that it is difficult to manufacture fibrous jelly products having uniform quality due to non-uniform growth of ice crystals caused by slight or subtle variations of freezing conditions such as temperature, speed, and time for freezing.

Another typical method involves forming a fibrous texture using some combination of gelling agents (cf: Japanese Unexamined Patent Application Gazette Nos. 59(1984)-159745 and 59(1984)-159746). More particularly, fibrous texture is formed by mixing a first liquid material containing gelatin and a second liquid material containing at least one gelling agent selected from the group consisting of carrageenan, furcellaran, low methoxyl pectin and agar-agar under acidic condition for reaction therebetween. The defects of these methods are that the formation of fibrous texture and furthermore solidification of the mixture of said first and second liquid materials cannot be assured, and depends upon slight or subtle variation of the reaction conditions such as temperature and agitation during the reaction process, since the optimum temperature range in which the fibrous textures are formed in the mixture of the first and second liquid materials is very close to the gelling temperature of the mixture.

An object of the present invention is to provide a new and simple method which is well suited for industrially manufacturing jelly products having fibrous texture in uniform quality.

The invention provides a method of manufacturing jelly products having fibrous texture, wherein a plurality of liquids are separately prepared, then mixed and cooled for gelling to provide the fibrous texture for the jelly products, comprising:

separately preparing

(a) a first liquid, the pH of which is adjusted to 4.0 or less, comprising at least one proteinaceous material selected from the group consisting of those originating from eggs, milk and soya beans in a quantity resulting in the protein content in the final products to be equal to or more than 0.02% by weight, and

(b) a second liquid, the pH of which is such that the pH value of said first and second liquids when mixed is equal to or less than 5.0, comprising at least one gum substance selected from the group consisting of xanthan gum, gum arabic and pullulane in a quantity such that the gum content in the mixture of said first and second liquids is equal to or greater than 0.02% by weight, and at least one gelling agent selected from the group consisting of agar-agar, furcellerane and carrageenan in a quantity such that the gelling agent content in the mixture of all the liquid materials is in the range 0.1 - 1.0% by weight;

mixing said first and second liquids at a temperature higher than the gelling temperature of the resultant mixture, determined by the gelling agent used, to form fibrous texture in the mixture; and

cooling the mixture to form a gel having fibrous texture.

Preferred embodiments of the invention are defined in the dependent claims.

Any other conventional ingredients for jelly products such as acids, sweeteners, other seasonings, flavours, coloring agents, a small quantity of materials derived from fruit and/or vegetables, for example, juice, pulp, puree of fruit and/or vegetables and the like can be included in said first and/or second liquid materials. However, they can be added to the mixture of said first and second liquid materials in the form of an additional liquid material in which one or more of them are included. In the case that a large quantity of materials derived from fruit and/or vegetables are used, it is preferable to prepare an additional quantity of liquid in which one or more of them is included then to add it to the mixture of said first and second liquid materials after the fibrous texture is formed therein, since substances, such as pectin, contained in fruit and/or vegetables may disturb the formation of fibrous texture.

The one or more proteinaceous materials to be used in the present invention are selected from those derived from eggs, milk and soya beans. The one or more gelling agents to be used in the present invention are selected from the group consisting of carrageenan, furcellaran and agar-agar. The one or more gums to be used in the present invention are selected from the group consisting of xanthan gum, gum arabic and pullulane. These materials are available in the market.

The first liquid material can be prepared by dispersing the proteinaceous material(s) in water and adjusting the pH to be equal to or less than 4.0 by adding acid thereto. The amount of proteinaceous material included in the first liquid should be sufficient to give a protein content of at least 0.02 wt.% in the mixture of first and second liquids. Preferably, the resultant liquid is heated to a temperature of more than 65°C for pasteurization.

The second liquid can be prepared by dispersing one or more gum substances and one or more gelling agents into water. The amount of the gum substance in the second liquid should be sufficient to give a gum content of at least 0.02 wt.% in the mixture of said first and second liquids. The quantity of the gelling agent in the second liquid should be sufficient to give a gelling agent content of 0.1 - 1.0 wt.% in the final product.

Any other conventional ingredients for jelly products such as acids, sweeteners, other seasonings, flavours, coloring agents, small quantity of materials derived from fruit and/or vegetables, for example, juices, pulps, purees of fruit and/or vegetable and the like can be included in said first and/or second liquids. However, they can be added to the mixture of said first and second liquids in an additional liquid. In the case that large quantity of materials derived from fruit and/or vegetables are used, it is preferable to prepare an additional liquid in which one or more of them are included and then to add it to the mixture of said first and second liquids after the fibrous texture is formed therein, since substances, such as pectin, contained in fruits and/or vegetables may disturb the formation of fibrous bodies. It should be noted that, when one or more materials derived from fruit and/or vegetables are added to the first or second liquid, there is an upper limit of the quantity to be added. However, when they are added to the mixture of said first and second liquids, there is no limitation of the quantity to be added.

All the liquid materials other than the first liquid material are so adjusted as to cause the pH value of the resultant mixture to become equal to or less than 5.0. The selection of the gelling agents and the gum substances to be used should take into account the mouthfeel, taste and texture of the final product.

All of the above liquids can be subjected to sterilization or pasteurization by heating.

The above liquids are mixed and caused to form fibrous textures therein, then cooled (preferably to a temperature equal to or lower than 10°C) to form a gelled jelly product having a fibrous texture.

The first and second liquids are preferably mixed under agitating conditions which result in a laminar flow and eliminate or minimize turbulent flow. When batchwise mixing is employed, for example, a 1000 ℓ capacity tank with an anchor type agitator can be adequately used under 18 - 72 r.p.m. which may generate laminar flow. When line mixing is made in pipe lines, for example, it is preferable to control the flow velocities of liquid materials in the pipe lines so as to eliminate turbulence substantially after they flow together. A desirable agitating condition can be determined by taking the Reynolds number into consideration.

It will be understood from the forgoing that in order to simplify the method, it is preferable to use only two liquids, one containing proteinaceous materials and the other containing gum substances and gelling agents.

When a material derived from fruit or vegetable is to be added, it is preferable to add it as an additional liquid after said first and second liquids are mixed and fibrous textures are formed therein.

Any other additional ingredients can be included in any of the liquids.

The mixture of the liquids can be filled into containers and sealed prior to cooling.

Now some exemplifying tests will be described for a better understanding of the present invention.

TEST 1

The purpose of this test is to exemplify the effects of variations in pH value of the first liquid on the formation of fibrous texture.

## (1) PREPARATION OF TEST SAMPLES

### (1-1) PREPARATION OF FIRST LIQUID MATERIAL

Seven samples of 2.0 wt.% aqueous solution of skim milk having different pH values as shown in Table 2 were prepared by adding different quantities of 10 wt.% aqueous solution of citric acid thereinto. Respective samples were heated to 80 °C for 10 minutes, then cooled to 30 °C.

### (1-2) PREPARATION OF SECOND LIQUID MATERIAL

A quantity of a sample of the second liquid material having the composition as shown in Table 1 was prepared by dispersing the ingredients into water, heating the resultant mixture to 100 °C for 10 minutes, and then cooling to 70 °C.

Table 1

| | |
|---|---|
| xanthan gum | 0.10 wt.% |
| sodium citrate | 0.20 wt.% |
| agar-agar | 0.40 wt.% |
| water | 99.30 wt.% |
| Total | 100.00 wt.% |

## (2) PREPARATION OF JELLY PRODUCTS

Having mixed 22 g of the respective samples of the first liquid materials into seven lots of the second liquid material each weighing 78g, seven samples of liquid mixtures were prepared. The temperatures of the respective liquid mixtures were about 65 C. The resultant mixtures were each cooled to 10 °C for gelling. The resultant jelly products were observed with the naked eye for evaluation of their texture.

## (3) THE RESULTS OF THE TEST

The results of the test are shown in Table 2.

Table 2

| pH of 1st liquid | pH of liquid mixture | evaluation of jelly texture |
|---|---|---|
| 2. 5 | 4. 2 | ◎ |
| 3. 0 | 4. 5 | ◎ |
| 3. 5 | 4. 7 | ◎ |
| 4. 0 | 5. 0 | ○ |
| 4. 5 | 5. 2 | × |
| 5. 0 | 5. 4 | × |
| 5. 5 | 5. 6 | × |

Note:  ◎ : fibrous textures of 5 - 10 mm long being uniformly suspended

○ : fibrous textures of 1 - 5 mm long being uniformly suspended

× : observed no fibrous textures

## (4) CONCLUSION

From the results shown in Table 2, it will be understood that fibrous texture can be formed when the first liquid WaS adjusted to pH 4.0 or less.

## (5) SUPPLEMENTAL TEST AND THE RESULTS THEREOF

The purpose of this supplemental test is to exemplify the effects of variations in pH value of the first liquid in relation to the variation in pH value of the second liquid on the formation of fibrous textures.

Various samples of second liquids Having different pH values were prepared by adjusting the pH of the second liquid prepared in Test 1 by adding an aqueous solution of sodium hydroxide or citric acid thereto. Having used the resultant various samples of the second liquid and the seven samples of the first liquid prepared in Test 1, jelly products were prepared in the same manner as in Test 1. The results were the same as shown in Table 2. In other words, fibrous textures were formed when the first liquid was adjusted to pH 4.0 or less, even though the pH value of the mixture of said first and second liquids was equal to or less than 5.0.

## TEST 2

The purpose of this test is to exemplify the effects of the variations in pH value of the mixture of said first and second liquids on the formation of fibrous textures.

### (1) PREPARATION OF TEST MATERIALS

### (1-1) PREPARATION OF FIRST LIQUID MATERIAL

A quantity of a. sample of 2.0 wt.% of aqueous skim milk solution was prepared by dissolving skim milk into water in the same manner as in Test 1. The resultant solution was adjusted to pH 3.5 by adding 10 wt.% aqueous solution of citric acid. The resultant solution was heated to 80 °C for 10 minutes, then cooled to 30°C.

### (1-2) PREPARATION OF SECOND LIQUID MATERIAL

Seven samples of the second liquid material having different pH values as shown in Table 3 were prepared in the same manner as in Test 1. Each of the samples were heated to 100 °C for 10 minutes, then cooled to 70 °C.

### (2) PREPARATION OF JELLY PRODUCTS

Having used the respective samples, jelly products were prepared in the sane manner as in Test 1.

### (3) RESULTS

The results are shown in Table 3.

Table 3

| sample No. | ingredient of second liquid material | | | | | pH of the mixture | evaluation of jelly texture |
|---|---|---|---|---|---|---|---|
| | xanthan gum | sodium citrate | agar | water | total | | |
| 1 | 0.10 | 0.10 | 0.40 | 99.40 | 100.00 | 3.7 | ◎ |
| 2 | 0.10 | 0.15 | 0.40 | 99.35 | 100.00 | 4.1 | ◎ |
| 3 | 0.10 | 0.20 | 0.40 | 99.30 | 100.00 | 4.5 | ◎ |
| 4 | 0.10 | 0.25 | 0.40 | 99.25 | 100.00 | 5.0 | ○ |
| 5 | 0.10 | 0.30 | 0.40 | 99.20 | 100.00 | 5.5 | × |
| 6 | 0.10 | 0.40 | 0.40 | 99.10 | 100.00 | 5.8 | × |
| 7 | 0.10 | 0.60 | 0.40 | 98.90 | 100.00 | 6.0 | × |

Note: ◎ : fibrous textures of 5 - 10 mm long being uniformly suspended

○ : fibrous textures of 1 - 5 mm long being uniformly suspended

× : observed no fibrous textures

(4)CONCLUSION

It will be understood that the fibrous textures were formed when the liquid mixtures were adjusted to pH 5.0 or less.

TEST 3

The purpose of this test is to exemplify the effects of the kinds of proteinous material to be contained in a first liquid material to the formation of the fibrous textures.

(1) PREPARATION OF TEST MATERIALS

(1-1) PREPARATION OF FIRST LIQUID MATERIAL

Seven samples of the first liquid material each containing one of the proteinous materials as shown in Table 4 were prepared in the same manner as in Test 2.

(1-2) PREPARATION OF SECOND LIQUID MATERIAL

A quantity of a sample of the second liquid material was prepared in the same manner as in Test 1.

(2) PREPARATION OF JELLY PRODUCTS

Having used the samples prepared, a plurality of jelly products were prepared in the same manner as in Test 1.

(3) RESULTS OF THE TEST

The results are shown in Table 4.

Table 4

| sample No. | ingredients of the first liquid material | | | | evaluation of jelly textures |
|---|---|---|---|---|---|
| | proteinous material | citric acid | water | total | |
| 8 | skim milk | | | | |
| | 1.8% | 0.6% | 97.6% | 100.00% | ◎ |
| 9 | whey powder | | | | |
| | 4.2% | 0.6% | 95.2% | 100.00% | ◎ |
| 10 | gelatin | | | | |
| | 0.6% | 0.6% | 98.8% | 100.00% | × |
| 11 | egg white | | | | |
| | 5.7% | 0.6% | 95.5% | 100.00% | ○ |
| 12 | egg yolk | | | | |
| | 3.9% | 0.6% | 95.5% | 100.00% | ◎ |
| 13 | soybean flower | | | | |
| | 1.8% | 0.6% | 97.6% | 100.00% | ○ |
| 14 | wheat flower | | | | |
| | 5.7% | 0.6% | 93.7% | 100.00% | × |

Note: ◎ : fibrous textures of 5 - 10 mm long being uniformly suspended

○ : fibrous textures of 1 - 5 mm long being uniformly suspended

× : observed no fibrous textures

(4) CONCLUSION

It will be understood that fibrous textures were formed when proteinous materials originating from milk (skim milk powder, whey), eggs (egg white, egg yoke) and soya beans (soya bean flouer) were used.

TEST 4

The purpose of this test is to exemplify the effects of variations in concentration of protein included in the first liquid On the formation of fibrous texture.

(1) PREPARATION OF TEST MATERIALS

(1-1) PREPARATION OF FIRST LIQUID MATERIAL

Eight samples of the first liquid material having different concentrations of protein as shown in Table 5 were prepared. Each of the resultant liqUidS WaS adjusted to pH 3.5 by adding 10 % aqueous solution of citric acid. The resultant solutions were heated to 80 °C for 10 minutes, then cooled to 30 °C.

(1-2) PREPARATION OF SECOND LIQUID MATERIAL

A quantity of a sample of the second liquid material was prepared in the same manner as in Test 1.

## (2) PREPARATION OF JELLY PRODUCTS

Having used the prepared samples, a plurality of jelly products were prepared in the same manner as in Test 1.

## (3) RESULTS

The results are shown in Table 5.

Table 5

| concentration of skim milk in 1st liquid materials (wt. %) | concentration of protein in the mixtures of 1st and 2nd liquid (wt. %) | evaluation of jelly texture |
|---|---|---|
| 0.2 | 0.015 | × |
| 0.3 | 0.022 | ○ |
| 0.5 | 0.037 | ◎ |
| 1.0 | 0.075 | ◎ |
| 1.5 | 0.112 | ◎ |
| 2.0 | 0.150 | ◎ |
| 3.0 | 0.224 | ◎ |
| 4.0 | 1.36 | ◎ |

Note:  ◎ : fibrous textures of 5 - 10 mm long being uniformly suspended

○ : fibrous textures of 1 - 5 mm long being uniformly suspended

× : observed no fibrous textures

## (4) CONCLUSION

From the results shown in Table 5, it will be understood that fibrous textures were formed when the first liquid materials contained proteinaceous material in an amount which may cause the protein content in the mixture of the first and second liquid materials to become 0.02 wt.% or more.

Having used egg white, egg yoke, soya bean flouer as proteinous material, the effects of variations in concentration of protein included in the first liquid material to the formation of fibrous textures were tested in the same manner as in Test 4. The results were the same with the case wherein skim milk powder was used. In other words, fibrous textures were formed when the first liquid materials contained proteinaceous materialinan amount which may cause the protein content in the mixture of the first and second liquid materials to become 0.02 wt.% or more.

## TEST 5

The purpose of this test is to exemplify the effects of kinds of gum substances to be included in the second liquid material to the formation of fibrous texture.

## (1) PREPARATION OF TEST MATERIALS

## (1-1) PREPARATION OF FIRST LIQUID MATERIAL

A quantity of a sample of the first liquid material was prepared in the same manner as Sample No. 8 in Test 3.

EP 0 334 466 B1

## (1-2) PREPARATION OF SECOND LIQUID MATERIAL

Five samples of the second liquid material each containing one of the gum substances as shown in Table 6 were prepared in the same manner as in Test 1.

## (2) PREPARATION OF JELLY PRODUCTS

Having used the prepared samples, a plurality of jelly products were prepared in the same manner as in Test 1.

## (3) RESULTS OF THE TEST

The results of this test are shown in Table 6.

### Table 6

| sample No. | ingredients of second liquid materials (%) | | | | | evaluation of jelly texture |
|---|---|---|---|---|---|---|
| | gum substances | sodium citrate | agar | water | total | |
| 15 | xanthan gum 0.1 | 0.2 | 0.4 | 99.3 | 100 | ◎ |
| 16 | guar gum 0.1 | 0.2 | 0.4 | 99.3 | 100 | × |
| 17 | locust bean gum 0.1 | 0.2 | 0.4 | 99.3 | 100 | × |
| 18 | gum arabic 0.1 | 0.2 | 0.4 | 99.3 | 100 | ○ |
| 19 | pullulane 0.1 | 0.2 | 0.4 | 99.3 | 100 | ○ |

Note: ◎ : fibrous textures of 5 - 10 mm long being uniformly suspended.

○: fibrous textures of 1 - 5 mm long being uniformly suspended.

× : observed no fibrous textures

## (4) CONCLUSION

From the results shown in Table 6, it will be understood that fibrous textures were formed when xanthan gum, gum arabic and pullulane were used as gum substances.

## TEST 6

The purpose of this test is to exemplify the effects of kinds of gelling agents to be included in the second liquid material to the formation of fibrous textures.

## (1) PREPARATION OF TEST MATERIALS

## (1-1) PREPARATION OF FIRST LIQUID MATERIAL

A quantity of a sample of the first liquid material was prepared in the same manner as Sample No. 8 in Test 3.

## (1-2) PREPARATION OF SECOND LIQUID MATERIAL

Six samples of the second liquid material each containing one of the gelling agents as shown in Table 7 were prepared in the same manner as in Test 1.

## (2) PREPARATION OF JELLY PRODUCTS

Having used the prepared samples, a plurality of jelly products were prepared in the same manner as in Test 1.

## (3) THE RESULTS OF THE TEST

The results are shown in Table 7.

### Table 7

| sample No. | ingredients of second liquid materials (%) | | | | | | evaluation of jelly texture |
|---|---|---|---|---|---|---|---|
| | gelling agent | calcium chloride | xanthan gum | sodium citrate | water | total | |
| 20 | agar-agar 0.4 | – | 0.1 | 0.2 | 99.3 | 100 | ◎ |
| 21 | carrageenan 0.3 | – | 0.1 | 0.2 | 99.4 | 100 | ◎ |
| 22 | LM pectin 0.6 | 0.01 | 0.1 | 0.2 | 99.09 | 100 | × |
| 23 | furcellaran 0.6 | – | 0.1 | 0.2 | 99.1 | 100 | ◎ |
| 24 | sodium algi- nate 0.5 | 0.01 | 0.1 | 0.2 | 99.19 | 100 | × |
| 25 | gelatin 1.2 | – | 0.1 | 0.2 | 98.5 | 100 | × |

Note: ◎ : fibrous textures of 5 - 10 mm long being uniformly suspended.

○: fibrous textures of 1 - 5 mm long being uniformly suspended.

×: observed no fibrous textures

## (4) CONCLUSION

From the results of Table 7, it will be understood that fibrous textures were formed when agar-agar, furcellaran and carrageenan were used as gelling agents.

## (5) SUPPLEMENTARY TEST

The purpose of this supplemental test is to exemplify the effects of combined use of gelling agents selected from the group consisting of agar-agar, fucellaran and carrageenan to the formation of fibrous textures.

The supplemental test was carried out in the same manner as in test 6 except that samples of second liquid materials were prepared using various combinations of gelling agents selected from the group.

The results were the same as that in Test 6.

Jelly products having fibrous texture and palatable mouthfeel were obtained in any combined use of the gelling agents when total quantity of the gelling agents falls in the range between 0.1 - 1.0 wt.% to the mixtures of the first and second liquid materials.

TEST 7

The purpose of this test is to exemplify the effects of variations in concentration of the gum substances contained in the second liquid material to the formation of fibrous texture.

(1) PREPARATION OF TEST MATERIALS

(1-1) PREPARATION OF FIRST LIQUID MATERIAL

A quantity of a sample of the first liquid material was prepared in the same manner as Sample No. 8 in Test 3.

(1-2) PREPARATION OF SECOND LIQUID MATERIAL

Twelve samples of the second liquid material each having a different concentration of gum substances as shown in Tables 8-1 8-2 and 8-3 were prepared in the same manner as in Test 1.

(2) PREPARATION OF JELLY PRODUCTS

Having used the prepared samples, a plurality of jelly products were prepared in the same manner as in Test 1.

(3) RESULTS OF THE TEST

The results are shown in Tables 8-1, 8-2 and 8-3.

Table 8-1

| sample No. | ingredients of second liquid materials | | | | | evaluation of jelly texture |
|---|---|---|---|---|---|---|
| | xanthan gum | sodium citarate | agar-agar | water | total | |
| 26 | 0.01 | 0.20 | 0.40 | 99.39 | 100 | × |
| 27 | 0.02 | 0.20 | 0.40 | 99.38 | 100 | × |
| 28 | 0.03 | 0.20 | 0.40 | 99.37 | 100 | ○ |
| 29 | 0.05 | 0.20 | 0.40 | 99.35 | 100 | ◎ |
| 30 | 0.10 | 0.20 | 0.40 | 99.30 | 100 | ◎ |
| 31 | 0.20 | 0.20 | 0.40 | 99.20 | 100 | ◎ |

Note: ◎ : fibrous textures of 5 - 10 mm long being uniformly suspended.

○: fibrous textures of 1 - 5 mm long being uniformly suspended.

×: observed no fibrous textures

Table 8-2

| sample No. | ingredients of second liquid materials | | | | | evaluation of jelly texture |
|---|---|---|---|---|---|---|
| | gum arabic | sodium citarate | agar-agar | water | total | |
| 32 | 0.01 | 0.20 | 0.40 | 99.39 | 100 | × |
| 33 | 0.02 | 0.20 | 0.40 | 99.38 | 100 | × |
| 34 | 0.03 | 0.20 | 0.40 | 99.37 | 100 | ○ |
| 35 | 0.05 | 0.20 | 0.40 | 99.35 | 100 | ○ |
| 36 | 0.10 | 0.20 | 0.40 | 99.30 | 100 | ○ |
| 37 | 0.20 | 0.20 | 0.40 | 99.20 | 100 | ○ |

Note: ◎ : fibrous textures of 5 - 10 mm long being uniformly suspended.

○: fibrous textures of 1 - 5 mm long being uniformly suspended.

×: observed no fibrous textures

Table 8-3

| sample No. | ingredients of second liquid materials (%) | | | | | evaluation of jelly texture |
|---|---|---|---|---|---|---|
| | pullulane | sodium citarate | agar-agar | water | total | |
| 38 | 0.01 | 0.20 | 0.40 | 99.39 | 100 | × |
| 39 | 0.02 | 0.20 | 0.40 | 99.38 | 100 | × |
| 40 | 0.03 | 0.20 | 0.40 | 99.37 | 100 | ○ |
| 41 | 0.05 | 0.20 | 0.40 | 99.35 | 100 | ○ |
| 42 | 0.10 | 0.20 | 0.40 | 99.30 | 100 | ○ |
| 43 | 0.20 | 0.20 | 0.40 | 99.20 | 100 | ○ |

Note: ◎ : fibrous textures of 5 - 10 mm long being uniformly suspended.

○: fibrous textures of 1 - 5 mm long being uniformly suspended.

×: observed no fibrous textures

(4) CONCLUSION

From Tables 8-1, 8-2 and 8-3, it will be understood that fibrous textures were formed when the concentrations of the gum substances were 0.02 wt.% (0.03 x 0.75 = 0.0225) or more in the mixture of the first and second liquid materials.

TEST 8

The purpose of this test is to exemplify the effects of the quantity and the order of mixing an additional liquid material containing fruit juice to the formation of fibrous textures.

## (1) PREPARATION OF TEST MATERIALS

## (1-1) PREPARATION OF FIRST LIQUID MATERIAL

A quantity of a sample of the first liquid material was prepared in the same manner as Sample No. 8 in Test 3.

## (1-2) PREPARATION OF SECOND LIQUID MATERIAL

A quantity of a sample of the second liquid material was prepared in the same manner as in Test 1.

## (2) PREPARATION OF JELLY PRODUCTS

## (2-1) ADDITON OF APPLE JUICE TO THE FIRST LIQUID MATERIAL

Nine lots of the liquid mixture were prepared by uniformly mixing 17 g of the first liquid material and different quantity of apple juice as shown in Table 9.

The resulted mixtures were uniformly mixed with 9 lots of the second liquid material each weighed 60 g respectively. The resultant mixtures were cooled to 10 °C in a refrigerator. The resulted jelly products were observed with the naked eye.

## (2-2) ADDITION OF APPLE JUICE TO THE MIXTURE OF FIRST AND SECOND LIQUID MATERIALS

Nine lots of the liquid mixtures of the firts and second liquid materials were prepared by mixing 17 g of the first liquid material and 60 g of the second liquid material respectively. The resultant mixtures were agitated for the instant with a spatula for the formation of fibrous textures therein. To the resultant mixtures, different quantities of the apple juice as shown in Table 9 were mixed. The resultant mixtures were cooled to 10 °C in a refrigerator.

The resultant jellies were observed with the naked eye.

## (3)THE RESULTS OF THE TEST

The results are shown in Table 9.

Table 9

| Quantities of apple juice (g) | evaluation of jelly products added to 1st liq. (2-1) | added to mixtures of 1st and 2nd liq. (2-2) |
|---|---|---|
| 0 | ◎ | ◎ |
| 2 | ◎ | ◎ |
| 4 | ◎ | ◎ |
| 6 | ○ | ◎ |
| 8 | × | ◎ |
| 10 | × | ◎ |
| 13 | × | ◎ |
| 17 | × | ◎ |
| 23 | × | ◎ |

Note: ◎ : fibrous textures of 5 - 10 mm long being uniformly suspended.

○: fibrous textures of 1 - 5 mm long being uniformly suspended.

× : observed no fibrous textures

## (4) CONCLUSION

From the results shown in Table 9, it will be understood that there was an upper limit of the quantity of apple juice to be added when the apple juice was added to the first liquid material, whereas there was no upper limit when apple juice was added to the mixtures of the first and second liquid materials.

## (5) SUPPLEMENTAL TEST AND THE RESULTS THEREOF

Supplemental tests similar to Test 8 were carried out as follows:
(1) The test wherein the first liquid material to which the apple juice was added in Test 8 was substituted with the second liquid material,
(2) The test wherein the apple juice was substituted with other kinds of fruit juice,
(3) The test wherein the quantities of apple juice to be added to the mixtures of the first and second liquid materials were further increased.
(4) The test wherein the apple juice in the supplemental test (3) was substituted with other kinds of fruit juice.

It was confirmed that the same results were observed in supplemental tests (1) and (2). In other words, there was an upper limit of the quantity of fruit juice to be added when the fruit juice was added to second liquid material. Furthermore, it was confirmed that fibrous textures were formed in all of the jelly products in supplemental tests (3) and (4).

It can be concluded that there is no upper limit to the quantities of fruit juice to be added when fruit juice is added to a mixture of the first and second liquids.

Thus the conditions for forming a jelly product with a fibrous texture are indicated by tests 1 to 8 to be as follows:-
1) conditions with respect to preparation of the first liquid:
a) at least one proteinaceous material selected from proteins originating from eggs, milk and soya beans,
b) pH adjusted to 4.0 or less,
c) at least 0.02 wt% of the protein content of the mixture of the first and second liquids should be included in the first liquid.

2) conditions with respect to preparation of the second liquid:

    d) at least one gum substance selected from the group consisting of xanthan gum, gum arabic and pullane,

    e) at least one gelling agent selected from the group consisting of agar-agar, carrageenan and furcellaran,

    f) pH adjusted to a value such that the mixture of the first and second liquids have a pH of 5.0 or less,

    g) at least 0.02 wt% of the gum content of the mixture of the first and second liquids should be included in the second liquid, and

    h) the gelling agent content of the mixture of all the liquids should be in the range 0.1 to 1.0 wt%.

3) optional conditions with respect to any additional liquid:

    i) an additional liquid derived from fruits or vegetables is desirably added to the mixture of the first and second liquids after the fibrous textures have been formed therein.

4) conditions with respect to mixing of liquids:

    j) all the liquids should be mixed at a temperature higher than the gelling temperature determined by the gelling agent used.

Preferred embodiments of the present invention are described below by way of example only.

EXAMPLE 1

```
COMPOSITION OF FIRST LIQUID MATERIAL
    skim milk powder          0.40
    citric acid               0.18
    coloring agent (red)      0.02
    flavour (peach)           0.20
    water                    29.20
    total                    30.00 Kg
```

All the ingredients were dispersed into water to prepare 30 Kg of first liquid material. The resultant dispersed liquid was heated to 90 °C and kept at the temperature for 10 minutes for pasteurization, then cooled to 30 °C. The pH value of the resultant first liquid material was 2.7.

```
COMPOSITION OF SECOND LIQUID MATERIAL
    xanthan gum               0.10
    sodium citrate            0.20
    carrageenan               0.40
    sugar                    20.00
    water                    49.30
    total                    70.00 Kg
```

All the ingredients were dispersed into water to prepare 70 Kg of second liquid material. The resultant dispersed liquid was heated to 90 °C and kept at the temperature for pasteurization, then cooled to 65 °C. The pH value of the resultant second liquid material was 7.5.

The resultant first liquid material was mixed into the second liquid material under agitation with anchor type agitator at 36 rpm to obtain a uniform mixture. The temperature and pH value of the resultant mixture were 55 °C and 4.3 respectively.

After filling the resultant mixture into containers then sealing the containers, the sealed containers were cooled to 10 °C in a refrigerator to prepare jelly products.

The resultant products had the appearance of peach pulps with uniformly dispersed fibrous textures, and palatable mouthfeel and taste.

EXAMPLE 2

```
         COMPOSITION OF FIRST LIQUID MATERIAL
         skim milk powder                0.40
         citric acid                     0.18
         coloring agent (yellow)         0.02
         flavour  (pear)                 0.20
         water                          29.20
         total                          30.00 Kg
```

All the ingredients were dispersed into water, the resultant liquid was heated to 90 °C and kept at the temperature for 10 minutes for pasteurization, then cooled to 30 °C. The pH value of the resultant first liquid material was 2.7.

```
         COMPOSITION OF SECOND LIQUID MATERIAL
             xanthan gum                 0.10
             sodium citrate              0.20
             carrageenan                 0.40
             sugar                      20.00
             water                      49.30
             total                      70.00 Kg
```

All the ingredients were dispersed into water, the resultant liquid was heated to 90 °C and kept at the temperature for 10 minutes for pasteurization, then cooled to 65 °C. The pH value of the resultant second liquid material was 7.5.

The first liquid material was mixed into the second liquid material while the second liquid material was agitated with an anchor type agitator at 36 rpm to obtain uniform mixture. The temperature and pH value of the resultant mixture were 55 °C and 4.3 respectively.

Having filled the resultant mixture into containers, the containers were sealed. The resultant sealed containers were cooled to 10 °C in a refrigerator to prepare jelly products having taste of pear.

The resultant products had the appearance of pear pulps with uniformly dispersed fibrous textures, and palatable mouthfeel and taste.

EXAMPLE 3

```
         COMPOSITION OF FIRST LIQUID MATERIAL
         skim milk powder                0.40
         citric acid                     0.06
         water                          16.54
         total                          17.00 Kg
```

All the ingredients were dissolved into water, the resultant liquid was heated to 90 °C and kept at the temperature for 10 minutes for pasteurization, then cooled to 30 °C. The pH value of the resultant first liquid material was 3.2.

### COMPOSITION OF SECOND LIQUID MATERIAL

| | |
|---|---|
| xanthan gum | 0.10 |
| sodium citrate | 0.20 |
| carrageenan | 0.40 |
| sugar | 20.00 |
| water | 39.30 |
| total | 60.00 Kg |

All the ingredients were dispersed into water, the resultant liquid was heated to 90 °C and kept at the temperature for 10 minutes for pasteurization, then cooled to 70 °C. The pH value of the resultant second liquid material was 7.5.

### COMPOSITION OF ADDITIONAL LIQUID MATERIAL

| | |
|---|---|
| peach juice | 15.00 |
| citric acid | 0.12 |
| flavour (peach) | 0.20 |
| coloring agent (red) | 0.02 |
| water | 7.64 |
| total | 23.00 Kg |

All the ingredients were dispersed into water, the resultant liquid was heated to 90 °C and kept at the temperature for 10 minutes for pasteurization, then cooled to 25 °C. The pH value of the resultant additional liquid material was 4.4.

The second liquid material was poured into 100 ℓ capacity tank, and the first liquid material was added thereto under agitation by an anchor type agitator at 36 rpm to form fibrous texture in the mixture. The temperature and pH value of the resultant mixture were 55 °C and 4.3 respectively.

Subsequent to preparation of the liquid mixture of said first and second liquid materials the additional liquid material was uniformly mixed thereinto, the resultant mixture was filled into containers, then cooled to 10 °C in a refrigerator after the containers were sealed.

The resultant products had the appearance of peach pulps with uniformly dispersed fibrous textures, and palatable mouthfeel and taste.

EXAMPLE 4

### COMPOSITION OF FIRST LIQUID MATERIAL

| | |
|---|---|
| skim milk powder | 0.40 |
| citric acid | 0.06 |
| water | 16.54 |
| total | 17.00 Kg |

All the ingredients were dissolved into water, the resultant liquid was heated to 90 °C and kept at the temperature for 10 minutes for pasteurization, then cooled to 30 °C. The pH value of the resultant first liquid material was 3.5.

COMPOSITION OF SECOND LIQUID MATERIAL

| pullulane | 0.10 |
|---|---|
| sodium citrate | 0.15 |
| furcellaran | 0.90 |
| sugar | 20.00 |
| water | 38.85 |
| total | 60.00 Kg |

All the ingredients were dispersed into water, the resultant liquid was heated to 90 °C and kept at the temperature for 10 minutes for pasteurization, then cooled to 70 °C. The pH value of the resultant second liquid material was 7.5.

COMPOSITION OF ADDITIONAL LIQUID MATERIAL

| pear juice | 15.00 |
|---|---|
| citric acid | 0.12 |
| flavour (pear) | 0.20 |
| coloring agent (yellow) | 0.02 |
| water | 7.66 |
| total | 23.00Kg |

All the ingredients were dispersed into water, the resultant liquid was heated to 90 °C and kept at the temperature for 10 minutes for pasteurization, then cooled to 25 °C. The pH value of the resultant additional liquid material was 4.4.

The second liquid material was poured into 100 ℓ capacity tank, and the first liquid material was added thereto under agitation by an anchor type agitator at 36 rpm to form fibrous textures in the mixture. The temperature and pH value of the resultant mixture were 65 °C and 4.6 respectively.

Subsequent to preparation of the liquid mixture of said first and second liquid materials the additional liquid material was uniformly mixed thereinto, the resultant mixture was filled into containers, then cooled to 10 °C in a refrigerator after the containers were sealed.

The resultant products had the appearance of pear pulps with uniformly dispersed fibrous textures, and palatable mouthfeel and taste.

It will be apparent that the present invention provides a simple and industrial method of manufacturing palatable jelly products having fruit-like fibrous texture and mouthfeel with uniform quality.

## Claims

1. A method of manufacturing jelly products having fibrous texture, wherein a plurality of liquids are separately prepared, then mixed and cooled for gelling to provide the fibrous texture for the jelly products, comprising:

separately preparing

(a) a first liquid, the pH of which is adjusted to 4.0 or less, comprising at least one proteinaceous material selected from the group consisting of those originating from eggs, milk and soya beans in a quantity resulting in the protein content in the final products to be equal to or more than 0.02% by weight, and

(b) a second liquid, the pH of which is such that the pH value of said first and second liquids when mixed is equal to or less than 5.0, comprising at least one gum substance selected from the group consisting of xanthan gum, gum arabic and pullulane in a quantity such that the gum content in the mixture of said first and second liquids is equal to or greater than 0.02% by weight, and at least one gelling agent selected from the group consisting of agar-agar, furcellerane and carrageenan in a quantity such that the gelling

18

EP 0 334 466 B1

agent content in the mixture of all the liquid materials is in the range 0.1 - 1.0% by weight;
mixing said first and second liquids at a temperature higher than the gelling temperature of the resultant mixture, determined by the gelling agent used, to form fibrous texture in the mixture; and
cooling the mixture to form a gel having fibrous texture.

2. A method according to claim 1 wherein there is provided an additional liquid material containing material derived from fruit and/or vegetable being separately prepared and said additional liquid material is mixed with the mixture of said first and second liquids at a temperature higher than the gelling temperature of the resultant mixture.

3. A method according to claim 2, wherein said material derived from fruit and/or vegetable is selected from the group consisting of juice, pulp and/or puree of fruit and/or vegetable.

4. A method according to any one of the preceding claims, wherein said first and second liquids are mixed under laminar flow agitating conditions.

## Revendications

1. Procédé de fabrication de produits en gelée ayant une texture fibreuse, dans lequel plusieurs liquides sont préparés séparément, puis mélangés et refroidis pour une gélification de façon à conférer la texture fibreuse aux produits en gelée, consistant à :

préparer séparément

(a) un premier liquide dont le pH est ajusté à 4,0 ou moins, comprenant au moins une matière protéique choisie dans le groupe formé par celles provenant d'oeufs, de lait et de soja en une quantité donnant aux produits finals une teneur en protéines égale ou supérieure à 0,02 % en poids, et

(b) un second liquide dont le pH est tel que le pH desdits premier et second liquides, lorsqu'ils sont mélangés, soit égal ou inférieur à 5,0, comprenant au moins une substance gommeuse choisie dans le groupe formé par la gomme de xanthane, la gomme arabique et la pullulane en une quantité telle que la teneur en gomme du mélange desdits premier et second liquides soit égale ou supérieure à 0,02 % en poids, et au moins un agent gélifiant choisi dans le groupe formé par la gélose, la furcellarane et la carraghénine en une quantité telle que la teneur en agent gélifiant du mélange de toutes les matières liquides soit comprise dans l'intervalle de 0,1 à 1,0 % en poids ;

mélanger lesdits premier et second liquides à une température supérieure à la température de gélification du mélange résultant, déterminée par l'agent gélifiant utilisé, pour former une texture fibreuse dans le mélange ; et

refroidir le mélange pour former un gel ayant une texture fibreuse.

2. Procédé selon la revendication 1, dans lequel il est fourni une matière liquide supplémentaire contenant une matière dérivée de fruit et/ou de légume, préparée séparément, et ladite matière liquide supplémentaire est mélangée avec le mélange desdits premier et second liquides à une température supérieure à la température de gélification du mélange résultant.

3. Procédé selon la revendication 2, dans lequel ladite matière dérivée de fruit et/ou de légume est choisie dans le groupe formé par du jus, de la pulpe et/ou de la purée de fruit et/ou de légume.

4. Procédé selon l'une quelconque des revendications précédentes, dans lequel lesdits premier et second liquides sont mélangés dans des conditions d'agitation en écoulement laminaire.

## Patentansprüche

1. Verfahren zum Herstellen von Geleeprodukten von faseriger Textur, in dem eine Mehrzahl von Flüssigkeiten getrennt voneinander hergestellt und dann gemischt und derart gekühlt werden, daß sie unter Bildung der faserigen Textur der Geleeprodukte gelieren,

wobei:

(a) eine erste Flüssigkeit, deren pH-Wert auf 4,0 oder darunter eingestellt ist und die mindestens eine proteinhaltige Substanz enthält, die aus der Gruppe ausgewählt ist, die aus den von Eiern, Milch und Sojabohnen stammenden proteinhaltigen Substanzen besteht, und die in einer solchen Menge verwendet wird, daß die Endpodukte mindestns 0,02 Gew.-% Protein enthalten und

(b) eine zweite Flüssigkeit, die einen solchen pH-Wert hat, daß ein Gemisch aus der ersten und der zweiten Flüssigkeit einen pH-Wert von höchstens 5,0 hat, und die mindestens eine Gumsubstanz enthält, die aus der Gruppe ausgewählt ist, die aus Xanthengum, Gummi arabicum und Pullulan besteht, und die in einer solchen Menge werwendet wird, daß das Gemisch aus der ersten und zweiten Flüssigkeit mindestens 0,02 Gew.-% Gum enthält, und mindestens ein Geliermittel, das aus der Gruppe ausgewählt sit, die aus Agar-Agar, Furcelleran und Carragheen besteht, und das in einer solchen Menge verwendet wird, daß das Gemisch aller flüssigen Substanzen einen Geliermittelgehalt im Bereich von 0,1 bis 1,0 Gew.-% hat;

die erste und die zweite Flüssigkeit bei einer Temperatur gemischt werden, die höher ist als die von dem verwendeten Geliermittel abhängige Geliertemperatur des erhaltenen Gemisches, so daß in dem Gemisch eine faserige Textur gebildet wird, und

durch Kühlen des Gemisches ein Gel mit einer faserigen Textur gebildet wird.

2. Verfahren nach Anspruch 1, dadurch gekennzeichnet, daß eine weitere flüssige Substanz verwendet wird, die eine getrennt hergestellte, von Obst und/oder Gemüse abgeleitete Substanz enthält, und die weitere flüssige Substanz mit dem Gemisch aus der ersten und der zweiten Flüssigekit bei einer Temperatur gemischt wird, die höher ist als die Geliertemperatur des so erhaltenen Gemisches.

3. Verfahren nach Anspruch 2, dadurch gekennzeichnet, daß die von Obst und/oder Gemüse abgeleitet Substanz aus der Gruppe ausgewählt ist, die aus Saft, Mark und/oder Püree von Obst und/oder Gemüse besteht.

4. Verfahren nach einem der vorhergehenden Ansprüche, dadurch gekennzeichnet, daß die erste und die zweite Flüssigkeit unter ein laminares Fließen herbeiführenden Rührbedingungen gemischt werden.